# EUROPEAN PATENT SPECIFICATION

(11) **EP 2 712 791 B1**
(45) Date of publication and mention of the grant of the patent: **08.07.2015**
(21) Application number: 12186597.6
(22) Date of filing: 28.09.2012
(51) Int. Cl.: B62J 1/14, B62K 19/46, B62J 1/12

(54) **Straddle-type vehicle**
Fahrzeug mit Sattel
Véhicule de type à enfourcher

(43) Date of publication of application: 02.04.2014
(73) Proprietor: YAMAHA MOTOR CO., LTD., Iwata-shi Shizuoka 438-8501 (JP)
(72) Inventor: Galimberti, Stefano, 20050 Gerno di Lesmo (MI) (IT); Locati, Claudio, 20050 Gerno di Lesmo (MI) (IT)
(74) Representative: Grünecker Patent- und Rechtsanwälte PartG mbB

(56) References cited:
- EP-A- 0 404 194
- JP-A- 1 009 085
- JP-A- 4 331 676
- JP-A- 10 236 357
- JP-A- 11 208 548
- JP-A- 2003 191 877
- JP-A- 2008 150 046
- US-B1- 6 336 579

## Description

The present invention relates to a straddle-type vehicle, in particular a scooter-type motorcycle, according to the preamble of claim 1. Such a straddle-type vehicle comprises: a seat portion configured to move between a first position and a second position, the first position being a position for riding, a lid portion located rearward of the seat portion and configured to move between a first position and a second position, a first contact portion formed on an upper portion of the seat portion, and a second contact portion formed on a lower portion of the lid portion, wherein the first contact portion is arranged to contact with the second contact portion when the seat portion and the lid portion are in their respective first positions.

Such a vehicle is known from JP-A-2008 150046. A vehicle according to the preamble of claim 1 is known from JP 4 331676 A.

Generally, many scooter-type motorcycles have a structure in which a seat portion is supported at a front portion so as to swing upwards and forwards around a horizontal lateral axis, between a first position and a second position. A storage box is often disposed below the seat, and an upper end aperture of the storage box is usually closed when the seat is in the first position, a closed position in which a rider can ride the scooter-type motorcycle by straddling the seat, and is accessible when the seat is in the second position, an open position.

Recently, such a scooter-type motorcycle has also been provided with a lid portion located rearward of the seat portion. This additional lid portion has been developed as a result of the need for better access to in vehicle components. Accordingly, such a lid portion is usually configured so as to cover specific in vehicle components of the scooter-type motorcycle, e.g., a fuel tank and the like.

More often than not, these new lid portions are also supported so as to be able to swing around a horizontal lateral axis. However, such rotatable support is usually provided at a rear portion of the lid portion so that the lid portion rotates upwards and rearwards between a first position and a second position. In other words, the lid portion is configured to rotate in a direction opposite to the rotation direction of the seat portion. Often, this lid portion is formed as a seat rear portion for a pillion passenger of the straddle-type vehicle to sit on, as is the case for the vehicle disclosed within JP-A-2008 150046.

However, when a seat portion is arranged in conjunction with a rearward lid portion in the manner disclosed within the prior art, a problem arises with respect to maximizing the available space below the seat portion and the lid portion. Namely, if the seat portion is simply raised to increase the volume below it, it becomes difficult for a rider to touch the ground with their feet.

On the other hand, if the lid portion is simply raised, easier unauthorized access to the underside of the lid portion, and a consequently any lid locking mechanism positioned underneath the lid portion, is facilitated. Hence, it becomes difficult to prevent an unauthorized person from being able to open the lid and seat portions.

Accordingly, the present invention is made in view of the foregoing circumstances, and it is an objective of the present invention to provide a straddle-type vehicle which not only has an increased effective capacity under a combined seat and lid portion, but is also able to effectively prevent the unauthorized openings of said portions.

According to the present invention, such an objective is achieved by the straddle-type vehicle of claim 1. Specifically, a straddle-type vehicle known from the prior art, as discussed above, has the further features that, when the seat portion and the lid portion are in their respective first positions, the lower surface of the lid portion located behind the second contact portion is positioned higher than the first and second contact portions, and a section of the upper surface of the seat portion forming the first contact portion is inclined upwards and rearwards.

By raising the lower surface of the lid portion located behind the second contact portion to a position higher than the first and second contact portions, the available volume under the lid portion is increased in comparison to a scooter-type motorcycle of the prior art. In addition, by combining this raised lower surface of the lid portion with the feature of the first contact portion being inclined upwards and rearwards, an interlocking structure is created in which the second contact portion overlaps the first contact portion not only in the vertical directions, but also the horizontal direction when seen from a side of the motorcycle. Such an interlocking structure significantly increases the difficulty involved in attempting to gain unauthorized access to the underside of the lid portion.

Thus, not only do the features that distinguish the present invention from the prior art increase the effective volume under the seat and lid portions, without it becoming difficult for a rider to touch the ground with their feet, but they also effectively prevent the unauthorized openings of said portions.

Preferably, a rear edge of the seat portion has a curved shape, preferably a concave shape, in a plan view and/or in a front view. As such, the lateral ends of the rear edge of the seat portion create an additional obstruction to assist in preventing unauthorized access to an underside of the lid portion.

Further, the seat portion preferably comprises a projection portion projecting rearward from the rear edge. Such a projection portion not only provides the seat portion with a further possible engaging means, but it also has the additional advantage of providing an easily replaceable surface upon which parts used for engaging the seat portion with the lid portion can be positioned.

Still further, the projection portion preferably includes a bias means, preferably a compression spring, configured to bias the lid portion in the direction of the second position when the seat portion and the lid portion are in their respective first positions. Accordingly, when the lid portion is to be opened by an authorized person, the bias means assists by urging the lid portion to separate from the seat portion, thus creating a gap into which an authorized person can insert their hand to grip the lid portion.

Yet further still, the straddle-type vehicle preferably comprises a storage box arranged under the seat portion. Accordingly, a user can store their helmet or the like under the seat portion.

Preferably, an upper surface of the storage box has a water guard portion arranged in front of the rear edge of the seat portion when the seat portion is in the first position. Thus, any water that runs down between the rear edge of the seat portion and the lid portion, due to rain or the like, is prevented from entering the storage box located under the seat portion.

Further, the water guard portion preferably comprises at least one rib that extends in a lateral direction beyond the side edge of the opening of the storage box. Hence, the water guard portion can be easily and inexpensively formed on the storage box.

The straddle-type vehicle comprises a vehicle component arranged under the lid portion, wherein the vehicle component is preferably a fuel tank. Thus, the fuel tank, or the relevant vehicle component, can be easily accessed by merely opening the lid portion.

Yet further still, a filler cap of the fuel tank is preferably located directly below the lid portion, and the section of the lower surface of the lid portion located above the filler cap is higher than the first and second contact portions when the seat portion and the lid portion are in their respective first positions. Accordingly, not only can the volume of the fuel tank be increased, but the filler cap can also be located at a higher position, thus allowing easier access thereto.

The straddle-type vehicle comprises an upper cover arranged between the vehicle component and the lid portion, the upper cover preferably having an opening to allow access to the vehicle component. Such an upper cover provides additional protection for the vehicle component, and can also provide support for additional vehicle fixtures.

The upper cover preferably includes a hand grip for a pillion passenger. Hence, by forming the hand grip integrally with the upper cover, not only is the hand grip provided with additional strength and will have less flex when placed under load by a pillion passenger, but the number of manufacturing processes required to construct the straddle-type vehicle are reduced.

The upper cover includes a hinge, and the lid portion is attached to the hinge such that the lid portion can rotate around an axis formed by the hinge to move from the first position to the second position. As such, during manufacture, the upper cover and the lid portion can initially be joined by the hinge to form a single unitary piece, and this single unitary piece can then be mounted on the straddle-type vehicle. Thus the process required to manufacture the straddle-type vehicle is simplified.

According to another preferred embodiment, the lid portion further comprises a lock hook. Hence, the lid portion can be locked by a user in the closed position.

Preferably, the lock hook is positioned further forward than a point positioned half way between the filler cap of the fuel tank and the first contact portion when the seat portion is in its first position. Thus, a small resisting force exerted by the lock hook becomes a large resisting moment, and any unauthorized attempt to force the lid portion from its closed position towards its open position needs to overcome this large resisting moment.

Still further, the seat portion is preferably a seat front portion and the lid portion is preferably a seat rear portion. This increases the available area suitable for sitting on either by a single rider, or a rider and a pillion passenger.

In the following, the present invention is explained in greater detail with respect to an embodiment thereof in conjunction with the accompanying drawings, wherein:
- Figure 1A:: is a side view of a scooter-type motorcycle (straddle-type vehicle) according to an embodiment of the present invention in the first position,
- Figure 1B:: is a side view of a scooter-type motorcycle (straddle-type vehicle) according to an embodiment of the present invention in the second position,
- Figure 2A:: is a partial perspective view of the storage box and the vehicle component of the scooter-type motorcycle depicted in Figure 1A, when the seat front portion (seat portion) and the seat rear portion (lid portion) are in their respective first positions,
- Figure 2B: is a partial perspective view of the storage box and the vehicle component of the scooter-type motorcycle depicted in Figure 1A, when the seat front portion (seat portion) and the seat rear portion (lid portion) are in their respective second positions,
- Figure 3:: is a detailed side view of the lid portion of Figure 1 in the second position,
- Figure 4:: is a detailed front view of the lid portion of Figure 1 in the second position,
- Figure 5:: is a top plan view of the lid portion and the upper cover of the scooter-type motorcycle of Figure 1A, when the lid portion is in the second position, and
- Figure 6:: is a cross-section along line VI-VI of the seat portion, the lid portion, the storage box and the vehicle component of the scooter-type motorcycle of Figure 2A, when the seat portion and the lid portion are in their respective first positions.

Among others, the following reference signs are used in the Figures:
1: Scooter type motorcycle (straddle type vehicle)
2: Seat front portion (seat portion)
2a: First contact portion
2b: Rear edge of seat front portion (seat portion)
3: Seat rear portion (lid portion)
3a: Second contact portion
4: Projection portion
5: Compression spring (bias means)
6: Storage box
7: Rib (water guard portion)
8: Fuel tank (vehicle component)
9: Fuel tank filler cap
10: Upper cover
11: Hand grip
12: Hinge
13: Lock face
14: Lock hook

One embodiment will be described below with reference to the accompanying drawings.

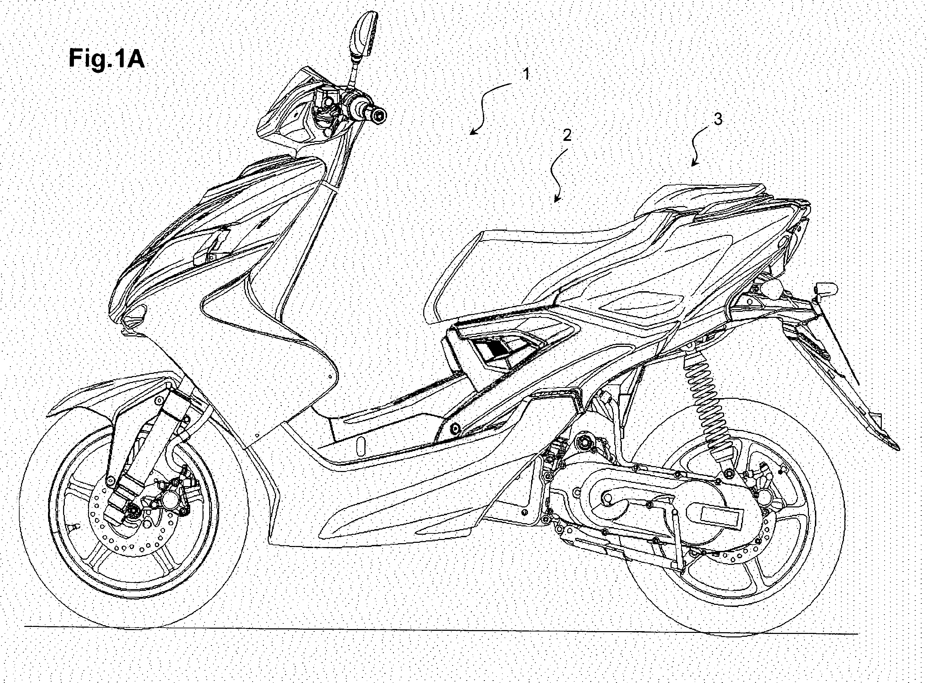

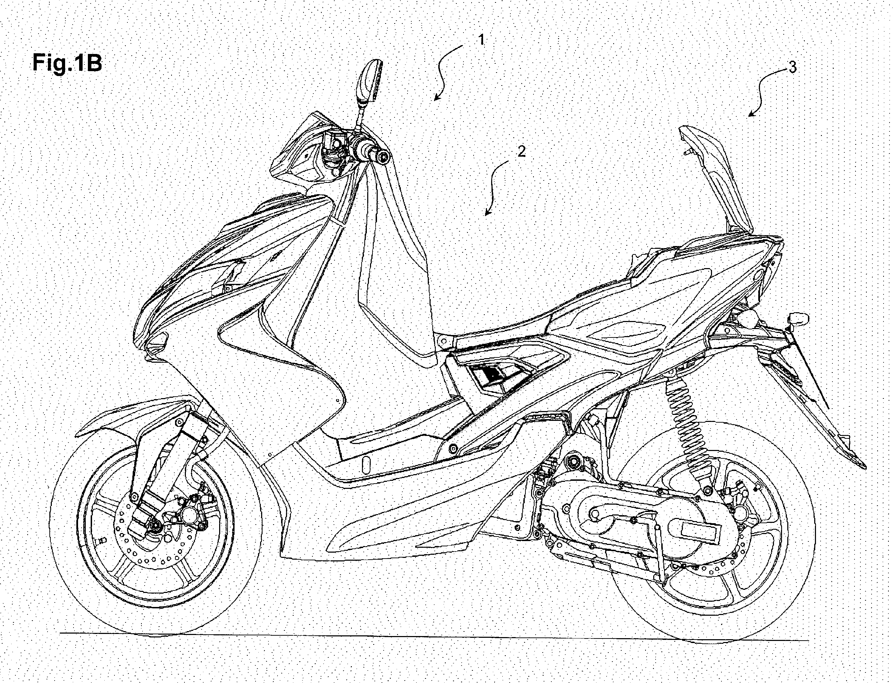

Figures 1 to 6 illustrate a scooter-type motorcycle (straddle-type vehicle) according to one embodiment. Therein, in general, a scooter-type motorcycle is a vehicle having a body frame (not shown) and a seat portion on which a rider can be seated straddling the body frame when being seated. Unless otherwise specified, the terms "right", "left", "front", "rear", "up" and "down" used in this embodiment refer to the right, left, front, rear, up and down when viewed from a rider seated on the seat portion.

In these Figures, a reference numeral 1 designates a scooter-type motorcycle. The motorcycle 1 has: an under-bone-type body frame (not shown); a front fork, which is supported steerably to the left and right by a head pipe (not shown) located at a front end of the body frame, and which places a front wheel and steering handle bars at a bottom end and a top end of the front fork, respectively; an engine unit, which is mounted to the body frame at its middle part in the front-rear direction, and which places a rear wheel at a rear end of the engine unit; a seat front portion 2 (seat portion) for a rider and a seat rear portion 3 (lid portion) mounted to the body frame.

The engine unit has: an engine body fixed to the body frame; and a transmission case, supported in a vertically swingable manner by the engine body, for transmitting engine power to the rear wheel pivotably supported at a rear end of the transmission case.

A storage box 6 is disposed on the body frame below the seat front portion 2 when the seat front portion 2 is in the closed position. To be more specific, the storage box 6 is located between the left and right rear frame sections of the rear frame.

The storage box 6 comprises an upper surface 6a, an upper end aperture formed in the upper surface 6a and a container section formed below the upper end aperture and having a capacity sufficient to accommodate therein a helmet and the like. The upper surface 6a is substantially flat and has a slight upward incline in the rearward direction. The upper end aperture is substantially oval shaped when seen in plan view. The container section is formed by sidewalls that extend in a substantially vertical direction downwards from the upper end aperture and a floor section that is a formed so as to join the bottom edges of the sidewalls in a substantially horizontal manner.

The storage box 6 is made from a resinous material and can be formed by injection moulding or the like.

A fuel tank 8 is disposed behind the container section of the storage box 6, and is located at a position slightly higher than the container section of the storage box 6 in a vertical direction.

An upper cover 10 is arranged between the fuel tank 8 and the seat rear portion 3. Specifically, a front section 10a of the upper cover 10 extends rearwardly from the rear of the upper surface 6a of the storage box 6 in an upward incline. In addition, the front section 10a of the upper cover 10 exhibits a slight convex curvature when seen in plan view, such that its outer lateral ends are located somewhat more rearward than its center. This slight convex shape becomes more pronounced as the front section 10a extends rearwards and upwards. A rear section 10b of the upper cover 10 then extends rearwardly from the front section 10a of the upper cover 10 in a substantially horizontal plane. Accordingly, the upper cover 10 substantially follows the contour of the fuel tank 8 without coming into contact therewith.

The fuel tank 8 has a fuel cap 9 fitted to its upper wall. The fuel cap 9 is designed to open and close a fuel inlet. An opening is formed in the upper cover 10 so as to allow access to the fuel cap 9 when the seat rear portion 3 is in the open position. Accordingly, the fuel cap 9 is exposed from above by opening the lid portion 3, e.g., moving the lid portion from the first position to the second position.

A hand grip 11 to be gripped by a pillion passenger is formed integrally with the upper cover 10. Specifically, the hand grip 11 comprises a pair of hand grips 11 formed on the left and right side, respectively, of the upper cover 10 so as to protrude from underneath the lid portion 3 when the lid portion 3 is in the closed position. The hand grip 11 may also comprise a single hand grip that generally resembles a U-shape in plan view and is formed so as to protrude from one side edge of the upper cover 10, extend around the rear end of the lid portion 3 to the other side edge of the upper cover 10.

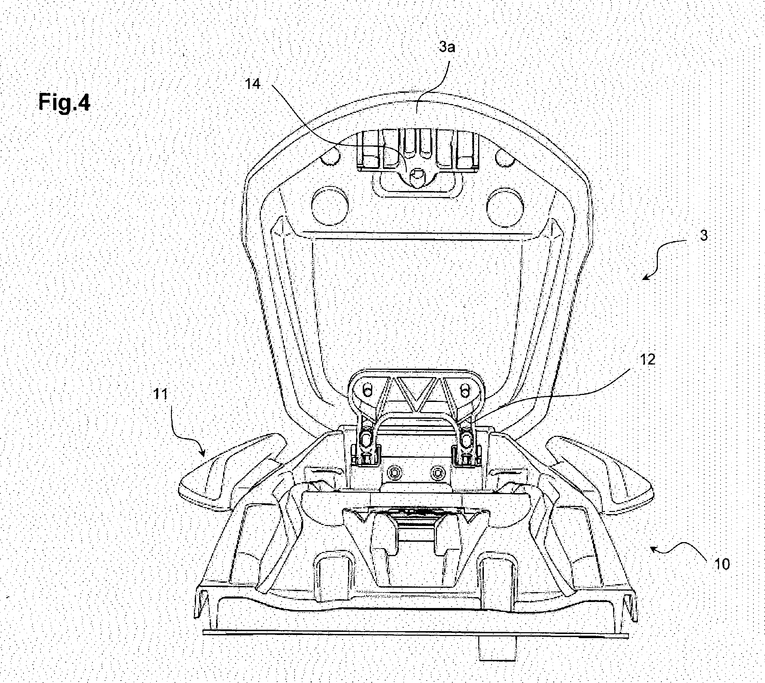

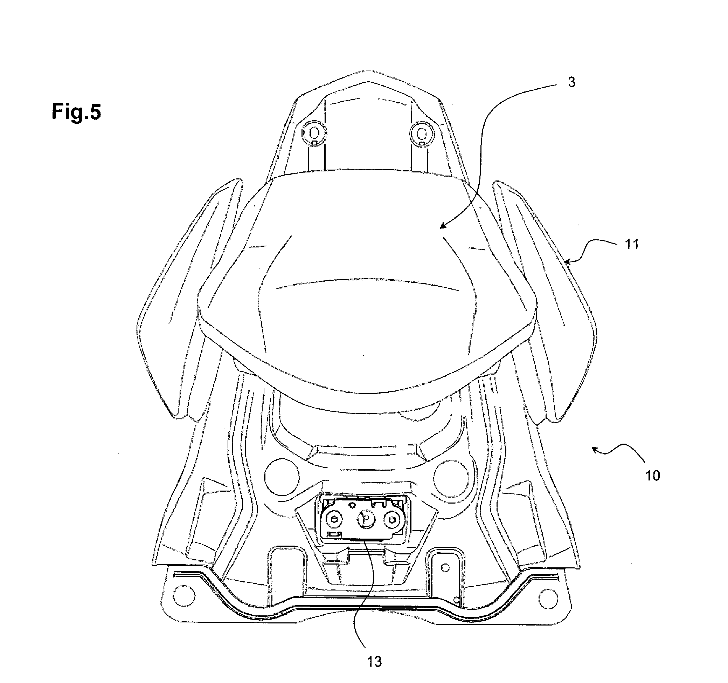

The upper cover 10 is made from a resinous material as a single unitary piece, and it can be formed by injection moulding or the like. Further, as shown in Figures 4 and 5, a gutter portion extends in a longitudinal direction along each lateral side of both the front section 10a and the rear section 10b of the upper cover. This gutter portion is formed on the lateral outside of the opening formed in the upper cover and acts as a water guard portion to assist in preventing water from gaining ingress to said opening.

The upper surface of the storage box 6 is formed having a water guard portion 7 disposed behind the upper end aperture of the storage box 6. This water guard portion 7 is located in front of the rear edge 2b of the seat portion 2 when the seat portion is in the closed position. Specifically, the water guard portion 7 comprises a rib 7 formed so as to protrude from the upper surface of the storage box 6 and extend from a left side lateral edge to a right side lateral edge of the upper surface of the storage box 6. The rib 7 is arranged so as to be located not only between the upper end aperture of the storage box 6 and the front section of the upper cover 10, but also between the upper end aperture of the storage box 6 and the rear edge 2b of the seat portion 2 when the seat portion 2 is in the closed position.

As shown in Fig. 1, the seat portion 2 is a seat front portion 2 for the driver of the scooter-type motorcycle, and the lid portion 3 is a seat rear portion for a pillion passenger. The seat rear portion 3 is formed at a location higher than the seat front portion 2. The seat front portion 2 and the seat rear portion 3 have a structure in which a seat cushion is disposed on a seat bottom plate forming a lower surface and an outer surface of the seat cushion is covered with an outer cover to form an upper surface.

As shown in Fig. 5, the lateral ends of the rear edge 2b of the seat front portion 2 are located at a position rearward of the center of the rear edge 2b of the seat front portion 2 in plan view when the seat front portion 2 is in the closed position. Accordingly, this concave shape of the rear edge 2b of the seat front portion 2 substantially follows the contour of the upper cover 10.

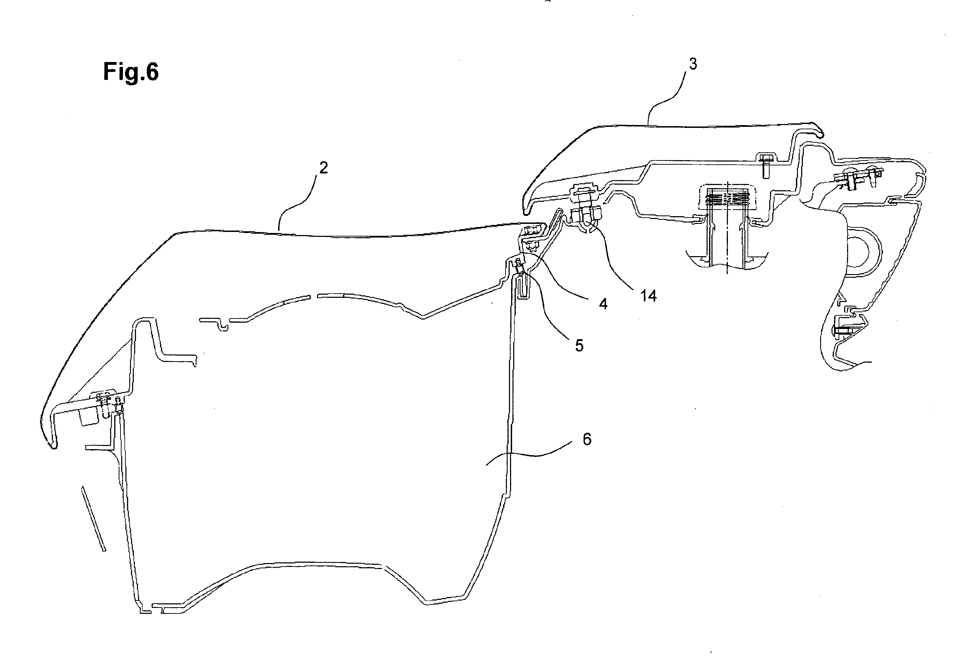

As shown in the cross section of Fig. 6, a front section of the seat rear portion 3 overlaps the rear edge 2b of the seat front portion 2 in the vertical direction when viewed from the side of the vehicle. In addition, the front section of the seat rear portion 3 is narrower than the rear edge 2b of the seat front portion 2 when seen in plan view. Accordingly, the lateral ends of the rear edge 2b of the seat front portion 2 extend laterally beyond the side edges of the front portion of the seat rear portion 3 when seen in plan view.

The lateral ends of the rear edge 2b of the seat front portion 2 are also located at a position higher than the center of said rear edge 2b, thus forming a curved concave shape when the seat front portion 2 is in the closed position and viewed from the front of the vehicle. This curved concave shape follows the contour of the side edges of the front section of the seat rear portion 3.

A projection portion 4 projects rearward from the rear edge 2b of the seat front portion 2. When the seat front portion 2 is in the closed position, the projection portion 4 rests in a corresponding recess formed on the front section 10a of the upper cover 10.

A compression spring 5 (bias means) is arranged on the projection portion 4 so as to be able to extend and compress in a substantially vertical direction when the seat front portion 2 is in the closed position. The compression spring 5 is dimensioned so as to be able to apply a substantially vertical urging force to the front section 10a of the seat rear portion 3 when said seat rear portion 3 and the seat front portion 2 are in their respective closed positions.

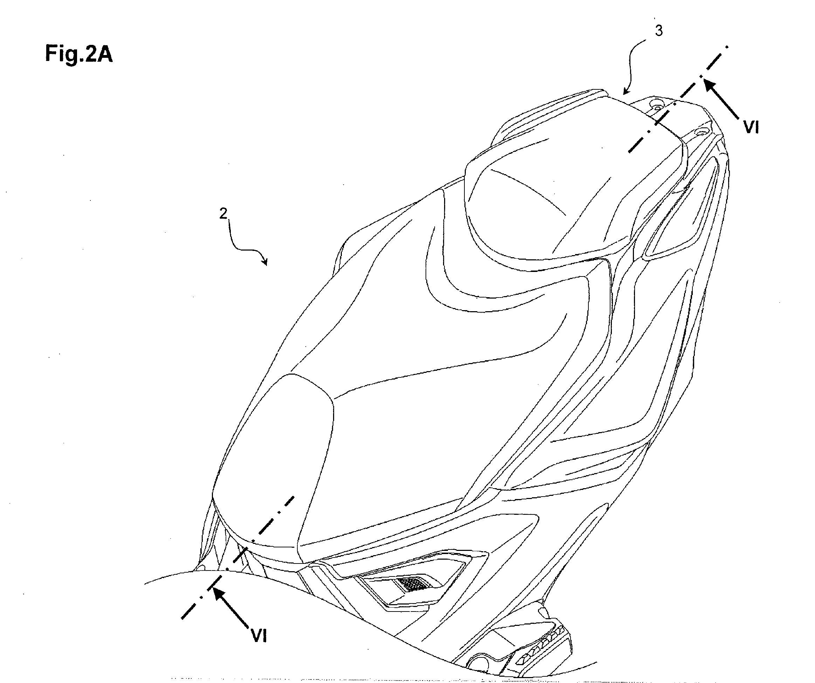

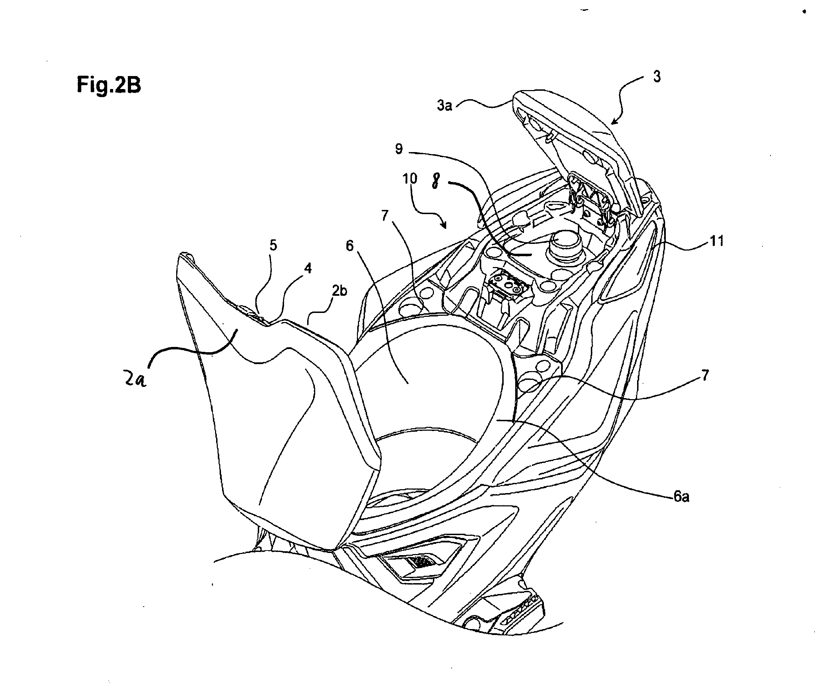

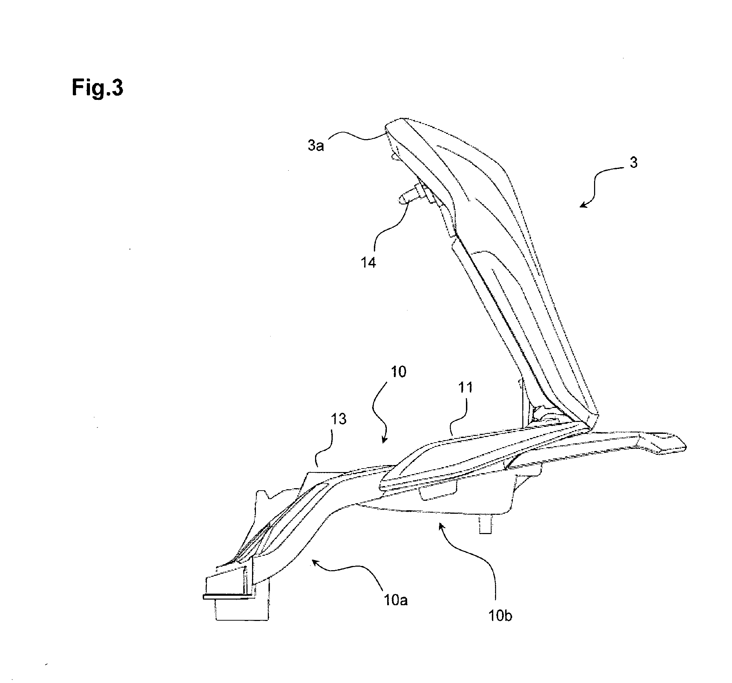

As shown in Figs. 3 and 4, a lock hook 14 is arranged on a lower surface of the front portion of the seat rear portion 3. The lock hook 14 comprises a single projecting portion that projects substantially vertically downwards from the lower surface of the front portion of the seat rear portion 3 when said seat rear portion 3 is in the closed position. The lock hook 14 has a notch formed in the projecting portion that is configured to engage with and be locked to a corresponding lock face 13 formed on the upper cover 10, when the seat rear portion 3 is in its closed position. As shown in Fig. 2, the lock face 13 is located immediately behind the recess that corresponds to the projection portion 4.

The seat rear portion 3 is supported at its rear end by a hinge 12. This allows the seat rear portion 3 to swing vertically from a closed position (first position) rearwards and upwards to an open position (second position). As shown in Fig. 4, a hinge plate is fixed to a rear section of the lower surface of the seat rear portion 3, and the other side of the hinge is formed within the upper cover 10.

A front section of the seat rear portion 3 overlaps with the rear edge of the seat front portion 2 in the vertical direction when viewed from the side of the vehicle. The upper surface of the seat front portion 2 overlapped by the seat rear portion 3 forms a first contact portion 2b. Correspondingly, the lower portion of the seat rear portion 3 that overlaps with the seat front portion 2 forms a second contact portion 3b.

As shown in the cross section of Fig. 6, as the surface of the first contact portion 2a extends towards the rear edge 2b of the seat front portion 2, it is inclined substantially upward and rearward. The lower surface of the seat rear portion 3 located behind the second contact portion 3a is positioned higher than the first and second contact portions 2a and 3a. Specifically, the lower surface of the seat rear portion 3 located above the filler cap 9 of the fuel tank 8 is positioned higher than the first and second contact portions 2a and 3a.

When the seat front portion 2 and seat rear portion 3 are located in their respective first positions, the lock hook 14 engages and locks with the locking face 13. As shown in Figs. 3 and 4, the lock hook 14 is arranged on the lower surface of the seat rear portion 3 in very close proximity to the second contact portion 3a. The locking face 13 is formed on the front section 10a of the upper cover 10 immediately behind the recess that corresponds to the projection portion 4. Accordingly, when the seat rear portion 3 is in the closed position (the first position), the lock hook 14 is positioned closer to the first and second contact portions 2a and 3a than to the filler cap 9 of the fuel tank 8. In other words, the lock hook 14 is located further forward than a point positioned half-way between the filler cap 9 of the fuel tank 8 and the first contact portion 2a when the seat front portion 2 is in its closed position (first position).

According to the embodiment of the present invention, when the seat front portion 2 and the seat rear portion 3 are both in their closed positions (their respective first positions), a lower surface of the seat rear portion 3 located behind the second contact portion 3a is positioned higher than the first and second contact portions 2a and 3a, and a section of the upper surface of the seat front portion 2 forming the first contact portion 2a is inclined upwards and rearwards. This not only results in an increase in the volume available under the seat rear portion 3, in comparison to a scooter-type motorcycle of the prior art, but it also results in the creation of an interlocking structure with the second contact portion 3a overlapping the first contact portion 2a in both the vertical and horizontal directions when seen from a side of the motorcycle. Thus, not only is the effective volume under the seat front and rear portions increased, without it becoming difficult for a rider to touch the ground with their feet, but it also becomes possible to severely inhibit unauthorized access to a lid locking mechanism positioned underneath the seat rear portion.

In this embodiment, the lid portion 3 is embodied as a seat rear portion 3 for a pillion passenger to sit on. Nevertheless, it is not necessary for achieving the objective of the present invention that the lid portion 3 be suitable for a pillion passenger. In the case of a scooter-type motorcycle designed for the sole use of a rider, the objective of the present invention can easily be achieved with a lid portion that was not suitable for a pillion passenger.

According to the embodiment, a rear edge 2b of the seat front portion 2 has a curved concave shape in a plan view. Thus, the rear edge 2b of the seat front portion 2 curves back and around to follow the generally curved contour of the supporting structure for the seat rear portion 3. In this manner, the lateral ends of the rear edge 2b of the seat front portion 2 are located at a position rearward of the center of the rear edge 2b of the seat front portion 2, thus creating an obstruction to an unauthorized user attempting to gain access to the underside of the seat rear portion.

According to the embodiment, a rear edge 2b of the seat front portion 2 also has a curved concave shape in a front view. Thus, the rear edge 2b of the seat front portion 2 also curves up and around to follow the contour of the side edges of the front section of the seat rear portion 3. In this manner, the lateral ends of the rear edge 2b of the seat front portion 2 are also located at a position higher than the center of said rear edge 2b, thus creating an additional obstruction to an unauthorized user attempting to gain access to the underside of the seat rear portion.

According to the embodiment, the seat front portion 2 further comprises a projection portion 4 projecting rearward from the rear edge 2b, and the projection portion 4 includes a compression spring 5, configured to bias the seat rear portion 3 towards its open position when the seat front portion 2 and the seat rear portion 3 are in their closed positions.

In this embodiment, the bias means 5 is embodied as a compression spring. Nevertheless, it would be clear to the person skilled in the art that the bias means 5 need not necessarily be a compression spring - the effect of the bias means 5 could be achieved with any suitable urging means, such as a rubber grommet, a small damper, etc.

According to the embodiment, a storage box 6 is arranged under the seat front portion 2, and an upper surface of the storage box 6 has a water guard portion 7 arranged in front of the rear edge 2b of the seat portion 2 when the seat portion 2 is in the closed position. Obviously, the storage box 6 need not necessarily be arranged under the seat front portion 2, and it would be possible to arrange the storage box at another location on the scooter-type motorcycle, e.g. under the seat rear portion 3. In addition, although in this embodiment the water guard portion comprises a rib 7 that extends in a lateral direction beyond a side edge of the opening of the storage box 6, it would be clear to the person skilled in the art that the effect of the water guard portion could easily be achieved with any suitable means, such as a lip, a gutter, etc.

According to the embodiment, a fuel tank 8 is arranged under the seat rear portion 3. In this embodiment, the vehicle component arranged under the lid portion is embodied as a fuel tank. Nevertheless, it would be clear to the person skilled in the art that the fuel tank need not necessarily be arranged under the lid portion. The fuel tank could quite easily be located somewhere else on the scooter-type motorcycle, under the seat portion for example. Furthermore, another vehicle component could be arranged under the lid portion instead of or in addition to the fuel tank; e.g. a fuel tank and an oil tank in the case of the engine unit being of the two-stroke type, a fuel cell, a battery, an electric socket, an air filter, etc.

According to the embodiment, a filler cap 9 of the fuel tank 8 is located directly below the seat rear portion 3, and the section of the lower surface of the seat rear portion 3 located above the filler cap 9 is positioned higher than the first and second contact portions 2a and 3a when the seat front portion 2 and the seat rear portion 3 are in their respective first positions.

According to the embodiment, an upper cover 10 is arranged between the fuel tank 8 and the seat rear portion 3. In this embodiment, the upper cover 10 has an opening to allow access to the fuel tank 8. Obviously, if the vehicle component arranged under the lid portion is a component other than a fuel tank, it may not be necessary to provide an opening in the upper cover.

According to the embodiment, the upper cover 10 includes a hand grip 11 for a pillion passenger. By forming the hand grip integrally with the upper cover, not only is the strength of the hand grip increased, but the number of manufacturing processes required to construct the scooter-type motorcycle are reduced.

According to the embodiment, the upper cover 10 includes a hinge 12, and the lid portion 3 is attached to the hinge 12 such that the lid portion 3 can rotate around an axis formed by the hinge 12 to move from the first position to the second position.

The lid portion 3 further comprises a lock hook 14, and the lock hook 14 is positioned further forward than a point positioned half way between the filler cap 9 of the fuel tank 8 and the first contact portion 2a when the seat portion 2 is in its first position. In this manner, the lock hook 14 is positioned further away from the rotation axis of the hinge 12 than in the prior art. Thus, a small resisting force exerted by the lock hook 14 becomes a large resisting moment. Hence, any unauthorized attempt to force the lid portion 3 from its closed position towards its open position needs to overcome this large resisting moment.

According to the embodiment, the seat portion 2 is a seat front portion 2 and the lid portion 3 is a seat rear portion 3.

Although the embodiment described above embodies the straddle-type vehicle as a scooter-type motorcycle, the present invention is not limited to merely a scooter-type motorcycle and is just as applicable to other straddle-type vehicles, such as motorcycles, jet-skis, quad-wheeled ATVs, snowmobiles, etc.

## Claims

1. Straddle-type vehicle (1) comprising:
a seat portion (2) configured to move between a first position and a second position, the first position being a position for riding;
a lid portion (3) located rearward of the seat portion (2) and configured to move between a first position and a second position;
a first contact portion (2a) formed on an upper surface of the seat portion (2);
a second contact portion (3a) formed on a lower surface of the lid portion (3); and
a vehicle component (8) arranged under the lid portion (3);
wherein the first contact portion (2a) is arranged to contact with the second contact portion (3a), a lower surface of the lid portion (3) located behind the second contact portion (3a) is positioned higher than the first and second contact portions (2a, 3a), and a section of the upper surface of the seat portion (2) forming the first contact portion (2a) is inclined upwards and rearwards, when the seat portion (2) and the lid portion (3) are in their respective first positions;
**characterized in that**
the straddle-type vehicle further comprises an upper cover (10) arranged between the vehicle component (8) and the lid portion (3);
wherein the upper cover (10) includes a hinge (12), and the lid portion (3) is attached to the hinge (12) such that the lid portion (3) can rotate around an axis formed by the hinge (12) to move from the first position to the second position.

2. Straddle-type vehicle (1) according to claim 1, wherein a rear edge (2b) of the seat portion (2) has a curved shape, preferably a concave shape, in a plan view and/or in a front view.

3. Straddle-type vehicle (1) according to claim 2, wherein the seat portion (2) further comprises a projection portion (4) projecting rearward from the rear edge (2b).

4. Straddle-type vehicle (1) according to claim 3, wherein the projection portion (4) includes a bias means (5), preferably a compression spring (5), configured to bias the lid portion (3) in the direction of the second position when the seat portion (2) and the lid portion (3) are in their respective first positions.

5. Straddle-type vehicle (1) according to any one of claims 1 to 4, further comprising a storage box (6) arranged under the seat portion (2).

6. Straddle-type vehicle (1) according to claim 5, wherein an upper surface of the storage box (6) has a water guard portion (7) arranged in front of the rear edge (2b) of the seat portion (2) when the seat portion (2) is in the first position.

7. Straddle-type vehicle (1) according to claim 6, wherein the water guard portion (7) comprises at least one rib (7) that extends in a lateral direction beyond a side edge of the opening of the storage box (6).

8. Straddle-type vehicle (1) according to any one of claims 1 to 7, wherein the vehicle component (8) is a fuel tank (8).

9. Straddle-type vehicle (1) according to claim 8, wherein a filler cap (9) of the fuel tank (8) is located directly below the lid portion (3), and the section of the lower surface of the lid portion (3) located above the filler cap (9) is positioned higher than the first and second contact portions (2a, 3a) when the seat portion (2) and the lid portion (3) are in their respective first positions.

10. Straddle-type vehicle (1) according to any one of claims 1 to 9, wherein the upper cover (10) has an opening to allow access to the vehicle component (8).

11. Straddle-type vehicle (1) according to claim 10, wherein the upper cover (10) includes a hand grip (11) for a pillion passenger.

12. Straddle-type vehicle (1) according to any one of claims 1 to 11, wherein the lid portion (3) further comprises a lock hook (14).

13. Straddle-type vehicle (1) according to claim 12, when dependent upon claim 8 or 9, wherein the lock hook (14) is positioned further forward than a point positioned half way between the filler cap (9) of the fuel tank (8) and the first contact portion (2a) when the seat portion (2) is in its first position.

14. Straddle-type vehicle (1) according to any one of claims 1 to 13, wherein the seat portion (2) is a seat front portion (2) and the lid portion (3) is a seat rear portion (3).

## Patentansprüche

1. Fahrzeug (1) mit Sattel, umfassend:
einen Sitzteil (2), der konfiguriert ist, um sich zwischen einer ersten Position und einer zweiten Position zu bewegen, wobei die erste Position eine Position für das Fahren ist,
einen Deckelteil (3), der hinter dem Sitzteil (2) angeordnet ist und konfiguriert ist, um sich zwischen einer ersten Position und einer zweiten Position zu bewegen,
einen ersten Kontaktteil (2a), der an einer oberen Fläche des Sitzteils (2) ausgebildet ist,
einen zweiten Kontaktteil (3a), der an einer unteren Fläche des Deckelteils (3) ausgebildet ist, und
eine Fahrzeugkomponente (8), die unter dem Deckelteil (3) angeordnet ist,
wobei der erste Kontaktteil (2a) angeordnet ist, um den zweiten Kontaktteil (3a) zu kontaktieren, wobei eine hinter dem zweiten Kontaktteil (3a) angeordnete untere Fläche des Deckelteils (3) höher positioniert ist als die ersten und zweiten Kontaktteile (2a, 3a) und wobei ein den ersten Kontaktteil (2a) bildender Abschnitt der oberen Fläche des Sitzteils (2) nach oben und hinten geneigt ist, wenn sich der Sitzteil (2) und der Deckelteil (3) jeweils an den ersten Positionen befinden,
**dadurch gekennzeichnet, dass**
das Fahrzeug mit Sattel weiterhin eine obere Abdeckung (10) umfasst, die zwischen der Fahrzeugkomponente (8) und dem Deckelteil (3) angeordnet ist,
wobei die obere Abdeckung (10) ein Scharnier (12) umfasst und der Deckelteil (3) an dem Scharnier (12) derart befestigt ist, dass sich der Deckelteil (3) um eine durch das Scharnier (12) gebildete Achse drehen kann, um sich von der ersten Position zu der zweiten Position zu bewegen.

2. Fahrzeug (1) mit Sattel nach Anspruch 1, wobei eine hintere Kante (2b) des Sitzteils (2) eine gekrümmte Form und vorzugsweise eine konkave Form in einer Draufsicht und/oder in einer Vorderansicht aufweist.

3. Fahrzeug (1) mit Sattel nach Anspruch 2, wobei der Sitzteil (2) weiterhin einen Vorsprungsteil (4) umfasst, der von der hinteren Kante (2b) nach hinten vorsteht.

4. Fahrzeug (1) mit Sattel nach Anspruch 3, wobei der Vorsprungsteil (4) eine Vorspanneinrichtung (5) und vorzugsweise eine Druckfeder (5) umfasst, die konfiguriert ist, um den Deckelteil (3) in der Richtung zu der zweiten Position vorzuspannen, wenn sich der Sitzteil (2) und der Deckelteil (3) jeweils an den ersten Positionen befinden.

5. Fahrzeug (1) mit Sattel nach einem der Ansprüche 1 bis 4, das weiterhin einen unter dem Sitzteil (2) angeordneten Aufbewahrungskasten (6) umfasst.

6. Fahrzeug (1) mit Sattel nach Anspruch 5, wobei eine obere Fläche des Aufbewahrungskastens (6) einen Wasserschutzteil (7) aufweist, der vor der hinteren Kante (2b) des Sitzteils (2) angeordnet ist, wenn sich der Sitzteil (2) an der ersten Position befindet.

7. Fahrzeug (1) mit Sattel nach Anspruch 6, wobei der Wasserschutzteil (7) wenigstens eine Rippe (7) umfasst, die sich in einer lateralen Richtung über eine seitliche Kante der Öffnung des Aufbewahrungskastens (6) hinaus erstreckt.

8. Fahrzeug (1) mit Sattel nach einem der Ansprüche 1 bis 7, wobei die Fahrzeugkomponente (8) ein Kraftstofftank (8) ist.

9. Fahrzeug (1) mit Sattel nach Anspruch 8, wobei ein Tankdeckel (9) des Kraftstofftanks (8) direkt unter dem Deckelteil (3) angeordnet ist und der über dem Tankdeckel (9) angeordnete Abschnitt der unteren Fläche des Deckelteils (3) höher positioniert ist als die ersten und zweiten Kontaktteile (2a, 3a), wenn sich der Sitzteil (2) und der Deckelteil (3) jeweils an den ersten Positionen befinden.

10. Fahrzeug (1) mit Sattel nach einem der Ansprüche 1 bis 9, wobei die obere Abdeckung (10) eine Öffnung aufweist, um einen Zugriff auf die Fahrzeugkomponente (8) zu gestatten.

11. Fahrzeug (1) mit Sattel nach Anspruch 10, wobei die obere Abdeckung (10) einen Handgriff (11) für einen Beifahrer umfasst.

12. Fahrzeug (1) mit Sattel nach einem der Ansprüche 1 bis 11, wobei der Deckelteil (3) weiterhin einen Sperrhaken (14) umfasst.

13. Fahrzeug (1) mit Sattel nach Anspruch 12, wobei in Abhängigkeit von Anspruch 8 oder 9 der Sperrhaken (14) weiter vorne positioniert ist als ein Punkt in der Mitte zwischen dem Tankdeckel (9) des Kraftstofftanks (8) und dem ersten Kontaktteil (2a), wenn sich der Sitzteil (2) an der ersten Position befindet.

14. Fahrzeug (1) mit Sattel nach einem der Ansprüche 1 bis 13, wobei der Sitzteil (2) ein vorderer Sitzteil (2) ist und der Deckelteil (3) ein hinterer Sitzteil (3) ist.

## Revendications

1. Véhicule de type à enfourcher (1), comprenant :
une partie de siège (2) configurée pour se déplacer entre une première position et une deuxième position, la première position étant une position de chevauchement ;
une partie de couvercle (3) située à l'arrière de la partie de siège (2) et configurée pour se déplacer entre une première position et une deuxième position ;
une première partie de contact (2a) formée sur une surface supérieure de la partie de siège (2) ;
une deuxième partie de contact (3a) formée sur une surface inférieure de la partie de couvercle (3) ; et
un composant de véhicule (8) agencé sous la partie de couvercle (3) ;
dans lequel la première partie de contact (2a) est agencée pour entrer en contact avec la deuxième partie de contact (3a), une surface inférieure de la partie de couvercle (3) située derrière la deuxième partie de contact (3a) est positionnée plus haut que les première et deuxième parties de contact (2a, 3a), et une section de la surface supérieure de la partie de siège (2) formant la première partie de contact (2a) est inclinée vers le haut et vers l'arrière, quand la partie de siège (2) et la partie de couvercle (3) se trouvent dans leur première position respective ;
**caractérisé en ce que**
le véhicule de type à enfourcher comprend en outre un capot supérieur (10) agencé entre le composant de véhicule (8) et la partie de couvercle (3) ;
dans lequel le capot supérieur (10) comprend une charnière (12), et la partie de couvercle (3) est attachée à la charnière (12) de telle sorte que la partie de couvercle (3) peut tourner autour d'un axe formé par la charnière (12) pour se déplacer depuis la première position jusqu'à la deuxième position.

2. Véhicule de type à enfourcher (1) selon la revendication 1, dans lequel un bord arrière (2b) de la partie de siège (2) présente une forme incurvée, de préférence une forme concave, dans une vue en plan et/ou dans une vue de face.

3. Véhicule de type à enfourcher (1) selon la revendication 2, dans lequel la partie de siège (2) comprend en outre une partie de projection (4) qui se projette vers l'arrière depuis le bord arrière (2b).

4. Véhicule de type à enfourcher (1) selon la revendication 3, dans lequel la partie de projection (4) comprend un moyen de déviation (5), de préférence un ressort de compression (5), configuré pour dévier la partie de couvercle (3) en direction de la deuxième position quand la partie de siège (2) et la partie de couvercle (3) se trouvent dans leur première position respective.

5. Véhicule de type à enfourcher (1) selon l'une quelconque des revendications 1 à 4, comprenant en outre un coffre de rangement (6) agencé sous la partie de siège (2).

6. Véhicule de type à enfourcher (1) selon la revendication 5, dans lequel une surface supérieure du coffre de rangement (6) comporte une partie de protection contre l'eau (7) agencée devant le bord arrière (2b) de la partie de siège (2) quand la partie de siège (2) se trouve dans la première position.

7. Véhicule de type à enfourcher (1) selon la revendication 6, dans lequel la partie de protection contre l'eau (7) comprend au moins une nervure (7) qui s'étend dans une direction latérale au-delà d'un bord latéral de l'ouverture du coffre de rangement (6).

8. Véhicule de type à enfourcher (1) selon l'une quelconque des revendications 1 à 7, dans lequel le composant de véhicule (8) est un réservoir de carburant (8).

9. Véhicule de type à enfourcher (1) selon la revendication 8, dans lequel un bouchon de remplissage (9) du réservoir de carburant (8) se trouve directement en dessous de la partie de couvercle (3), et la section de surface inférieure de la partie de couvercle (3) située au-dessus du bouchon de remplissage (9) se trouve plus haut que les première et deuxième parties de contact (2a, 3a) quand la partie de siège (2) et la partie de couvercle (3) se trouvent dans leur première position respective.

10. Véhicule de type à enfourcher (1) selon l'une quelconque des revendications 1 à 9, dans lequel le capot supérieur (10) comporte une ouverture pour permettre l'accès au composant de véhicule (8).

11. Véhicule de type à enfourcher (1) selon la revendication 10, dans lequel le capot supérieur (10) comprend une poignée (11) pour un passager de siège arrière.

12. Véhicule de type à enfourcher (1) selon l'une quelconque des revendications 1 à 11, dans lequel la partie de couvercle (3) comprend en outre un crochet de verrouillage (14).

13. Véhicule de type à enfourcher (1) selon la revendication 12, lorsqu'elle dépend de la revendication 8 ou 9, dans lequel le crochet de verrouillage (14) est positionné plus loin vers l'avant qu'un point positionné à mi-chemin entre le bouchon de remplissage (9) du réservoir de carburant (8) et la première partie de contact (2a) quand la partie de siège (2) se trouve dans sa première position.

14. Véhicule de type à enfourcher (1) selon l'une quelconque des revendications 1 à 13, dans lequel la partie de siège (2) est une partie avant de siège (2) et la partie de couvercle (3) est une partie arrière de siège (3).
